# EUROPEAN PATENT APPLICATION

(11) **EP 1 125 866 A2**
(43) Date of publication of application: **22.08.2001**
(21) Application number: 01301394.1
(22) Date of filing: 16.02.2001
(51) Int. Cl.: B65F 1/14, B65F 1/06, C05F 17/02

(54) **Improved ventilated container**

(30) Priority: 17.02.2000 GB 0003766
(71) Applicant: Rand, Richard John, Godalming, Surrey GU8 4RB (GB)
(72) Inventor: Rand, Richard John, Godalming, Surrey GU8 4RB (GB)
(74) Representative: Hutchins, Michael Richard

(57) **Abstract**

The invention provides a container 1 comprising an outer receptacle 2 and, disposed therein, an inner receptacle 6 in the form of a bag; the bag being permeable to gases; the outer receptacle having a plurality of spacers 8 extending inwardly from an inner surface 9 thereof, and a plurality of vents 10 in the walls 9 of the outer receptacle 2; the spacers 8 serving to support the inner bag 6 such that it is spaced apart from the inner surface 9 of the outer receptacle 2; and the vents 10 serving to allow air to circulate between the bag 6 and the outer receptacle 2.

## Description

The present invention relates to a container, and in particular to a container for use in the collection and storage of materials.

A major problem facing most communities is the problem of waste disposal. Each day vast quantities of waste are created, and such waste must be removed and processed in a safe and hygienic manner.

For waste materials storage and collection, the main choices open other than disposal of the waste are either incineration to generate energy, or separation of the waste material into fractions for recycling or composting or anaerobic digestion. In order to help encourage the cooperation of householders and other generators of waste materials to separate waste at source in a way which helps the processor of the waste to produce what the market demands, many local authorities now provide outside waste material collection bins.

Organic waste presents particular problems due in large part to the high moisture content of the waste. In warmer weather conditions, unless the waste is adequately vented, unpleasant odours can build up quickly as anaerobic conditions are set up in the waste collection bins.

The cost of collection of waste materials can be significant and one option open to waste collection authorities to reduce the cost of collections is to reduce the frequency of the collections. However, it will be appreciated that if the waste is left for longer periods, odour levels can become unacceptably high.

In addition to the problem of anaerobic decomposition, a further problem facing the collector of waste materials is the problem of infestation by vermin, insects and other small creatures.

There have been a number of disclosures by others relating to waste collection or storage bins providing an aerobic environment but such bins are considered to have significant limitations as to their usefulness and effectiveness.

European Patent Application No. 92610025 discloses a rubbish bag holder which requires a specially designed cart to transport the holder to a collection vehicle for emptying. One consequence of this is that the bag cannot be used with existing collection vehicle lifting gear generally in use in many areas. Moreover, the time taken for a contractor to empty the bag holder and move onto the next is greater than if the bag holder has its own wheels.

WO-A-95/01294 discloses a rather complicated arrangement which consists of an outer receptacle, an inner perforated supporting bag, and, within the supporting bag, an inner paper bag. In the more complex, and seemingly preferred, arrangements disclosed in WO-A-95/01294, there is additionally an inner insert container in the form of a laundry-basket like arrangement thus making a total of four nested containers in total.

US Patent No. 5031796 discloses a ventilated waste container, containing several relatively small arrays of vent holes at the upper and lower ends of the container. The container has vertical ribs which protrude inwardly from the walls of the container to function as spacers, the intention being that the spacers should prevent waste within the container coming into close contact with walls. However, the container of US 5031796 is not specifically designed for use with inner liner bags, and as a consequence, the spacers would only be of value for a narrow range of materials. Along with the spacers, the use of a grate on which the material is to be disposed also limits the range of material which can be deposited in the container, requiring the avoidance of cooked food and other material reduced to small fragments. The aim is only to deposit material which will not fall through the grate or prevent/limit the migration of air through or round the material, thus encouraging the development of anaerobic conditions.

My earlier application GB-A-2 327 034 discloses a container comprising an outer receptacle and, disposed therein, an inner receptacle in the form of a bag, the bag being permeable to gases, the outer receptacle having a plurality of spacers extending inwardly from an inner surface thereof, and a plurality of vents in the side walls and/or the base of the outer receptacle, the spacers serving to support the inner bag such that it is spaced apart from the inner surface of the outer receptacle, and the vents serving to allow air to circulate between the bag and outer receptacle.

The present invention relates principally, although not exclusively, to improvements in the containers disclosed in GB-A-2 327 034.

Accordingly, in a first aspect, the invention provides a container defining an outer receptacle, the container being configured to hold therein an inner receptacle in the form of a gas permeable bag, the outer receptacle having a plurality of spacers extending inwardly from an inner surface thereof, and a plurality of vents in the side walls and/or the base of the outer receptacle, the spacers serving to support the inner bag such that it is spaced apart from the inner surface of the outer receptacle, and the vents serving to allow air to circulate between the bag and outer receptacle; characterised in that:
(a) the spacers increase in depth towards a lower end of the outer receptacle; and/or
(b) the spacers have one or more holes therein to permit air to flow in a lateral direction around the bag; and/or
(c) the spacers have rounded inner edges: and/or
(d) the spacers are formed separately with respect to the outer receptacle and are then attached to the outer receptacle.

In a preferred embodiment, the spacers have at least characteristics (a) and (b), and preferably (c).

The container can be a container intended for use in the temporary storage of waste materials, such as household, domestic, business or industrial waste, but it can also be used for the storage of other materials which would benefit from the improved ventilation properties of the invention.

The purpose of the vents and spacers *inter alia* is to ensure that there is sufficient air movement between the outer and inner receptacles to avoid setting up anaerobic conditions. The shape, configuration, frequency and dimensions of the spacers and vents can vary according to the particular circumstances in which the container is to be used, and can depend for example on the number of air changes required for a given set of temperature assumptions, the nature of the material or product contained in the bag, and the specification of the bag.

In accordance with one embodiment of the invention, the spacers have holes therein. The holes permit air to travel in a lateral direction from one side of a spacer to the other thereby improving the airflow between the bag and the outer receptacle, and also have the effect of reducing the resistance to airflow along the channels defined by adjacent spacers. The holes can be of any shape or size but in one particular embodiment can be elongate in form, i.e. can be in the form of slots. Each spacer can have one hole or a plurality of holes. Preferably there are at least 2 holes and typically the number of holes will fall in the range from 2 to 10, for example 2 to 5. The holes in the spacers may be aligned with (e.g. be located on the same vertical level as) the vents in the outer receptacle.

According to another embodiment of the invention, the spacers are of greater depth towards the lower end of the outer receptacle, i.e. they protrude further into the interior of the receptacle. Thus, for example, the spacers can increase in depth towards the lower end of the container, or they can increase in depth in a sequence of steps. Preferably the spacers taper in an upwards direction.

The primary advantages associated with the increased depth of the spacers are twofold. Firstly, the angle of inclination of the spacers is of assistance in the removal of the bag from the outer receptacle. Secondly, the spacers ensure that the air gap between the wall of the outer receptacle and the bag at the lower end of the container is at its greatest adjacent the lower region of the bag which is likely to be the wettest. Thus the increased air gap and consequent increased air flow assists in accelerating the drying of the bag.

In a further embodiment, the spacers are provided with rounded inner edges, the advantage of this being that the edges are less likely to rupture the bag, particularly when wet. The spacers can advantageously be bulbous on their inner edges and in one embodiment, the portion of the spacer linking the bulbous inner edge with the wall of the outer receptacle can have a concave or biconcave form in section. The smooth curved surface presented by the concave or biconcave regions of the spacer further serve to reduce resistance to airflow.

The spacers can be formed integrally (e.g. moulded) with the outer receptacle but can alternatively be formed separately and then attached to the outer receptacle, for example by means of adhesive or welding, or by mechanical means such as a tongue and groove arrangement or an array of lugs and holes or other interlocking fastening means.

The vents typically are elongate in form and can be, for example, arranged in a plurality of substantially horizontal or vertical rows around the outer receptacle. Advantageously there are at least two and preferably at least three such rows. The rows can be parallel with respect to each other, and can be disposed such that the vents are in substantially vertical or horizontal alignment. Alternatively, the rows can be staggered.

Horizontally adjacent spacers can have a single vent therebetween, or a plurality of vents, for example two, three or four vents. The number of vents disposed between the pairs of adjacent spacers around the wall of the outer receptacle can the same for all spacers, or can differ.

The numbers and positions of the vents, as well as their shape and size, are typically chosen so as to permit free flow of air, by convection currents, from the bottom of the container to the top. Thus, although it is preferred that the side wall should contain vents, it is possible to omit vents from at least the lower ends of the side walls provided that the base is adequately vented and vents are provided at the upper end of the side wall and/or on any lid. It is most preferred however that any vents at the upper end of the container are on the side wall rather than on the lid, so at reduce the opportunities for ingress of rain water and pests such as flies.

The spacers can be in the form of elongate ribs. The configuration and arrangement of the spacers is preferably such that, together with the inner surface of the outer receptacle and the outer surface of the inner receptacle or bag, elongate ducts or channels are created which serve to channel convection currents between the inner and outer receptacles. The holes in the spacers are believed to reduce resistance to air movement along the channels and also allow air to move laterally between adjacent channels.

The elongate spacers typically extend in a substantially upwards direction, and most preferably are substantially vertical. Consequently, the ducts formed by the spacers extend in a substantially upwards and preferably substantially vertical direction.

The spacers can extend upwardly without interruption, from a location at or adjacent the lower end of the container, or there can be discontinuities in the spacers. Such discontinuities enable lateral movement of air currents as well as movement in an ascending or descending direction. Moreover, by making the spacers, and hence the ducts, relatively short, resistance to air movement through the ducts can be minimised. The discontinuities can be present even when the spacers themselves have holes therein.

Where the spacers are discontinuous, they can be, for example, arranged in a plurality of substantially horizontal rows around the inner surface of the outer receptacle. For example, there can be at least two such horizontal rows, e.g three or more such rows. The rows can be parallel with respect to each other, and can be disposed such that the spacers are in substantially vertical alignment. Alternatively, the rows can be staggered.

Vents can be present between the spacers in all rows, or only some of them, or none of them. For example, where the spacers are arranged in a plurality of rows, vents may be located between the spacers in only the uppermost row, or the uppermost two rows (where there are more than two rows).

In accordance with the invention, an even flow of air through the container between the bag and the inner face of the outer receptacle can be achieved by ensuring that the resistance to flow of air through the air ducts balances the resistance to flow of air through the vents through which the air moves out of the container. The resistance to air flow through the ducts can be controlled by controlling the dimensions of the spacers, and the distances between them. For example, in order to reduce resistance to air flow, the spacers can be made shorter and/or the distances between adjacent spacers increased and/or the depth of the spacers (i.e. the distance by which they protrude inwardly) can be increased. However, this must balanced against the requirements imposed by the material from which the bag is made and/or the materials which are to be contained in the bag. By ensuring that the amount of support given by the spacers takes into account the properties of the bag and contents of the bag, bulging of the bags into the ducts required for ventilation is minimised to avoid a restriction in the flow of air.

By way of example, the spacers can be from 0.25 cm to 15 cm apart and can have a depth of from 0.25 cm to 8 cm, for example up to 6cm, or up to 4 cm, or up to 2 cm, the term "depth" referring to the distance by which the spacers protrude inwardly from the walls of the container. Thus the ducts created between the inner and outer receptacles can have a cross sectional area of, for example, 0.06 cm² to 120 cm². The spacers can have a width varying from, for example, 0.25 cm to 5 cm. It will be appreciated however that the foregoing dimensions are merely exemplary and may vary according to the size of the container.

The ventilation system defined by the arrangement of spacers and vents set out above stimulates an air flow through the container by harnessing the natural convection of air within the container set up by temperature gradients between the outer receptacle and the inner receptacle bag and between the top and bottom of the container, or by the heating or cooling of the container to temperatures different from that of the surrounding air by, for example, solar radiation. By regulating, for example, the length of the columns of air in the ducts formed by the inside face of the container, spacers and inner receptacle, or the cross-sectional area and shape of the column of air, and the colour and finish of the container, it is possible to design the ventilation system to provide a given number of air changes per period of time for a given set of temperature conditions in and outside the container.

In order to take advantage of the effect of solar radiation on the temperature of the container, and hence the rate of convection, the colour and finish of the outer and inner receptacle can be varied. For example, in order to increase radiation absorption, the outer and/or the inner receptacle can be provided in dark colour, e.g. black.

An advantage of the ventilation system of the invention is that the air movement does not rely on either mechanical means of forcing air through the container, movement of air outside the container, or a heat source provided by the contents, and in this respect, the invention is distinguished from the prior art cited above. Nevertheless, by positioning the vents in the sides, the container is also designed to facilitate an even air flow through the ducts around the hole container by forced convection when windy conditions prevail, and also to take advantage of a heat source if provided by the contents or other means to generate air movement by convection.

A further advantage of the present invention is that it does not require any intervening structure (other than the spacers) between the outer and inner receptacles. In this respect, the invention is further distinguished from the container disclosed in WO-A-95/01294 which requires a reusable permeable supporting bag, and preferably also a "laundry basket" type structure between the outer receptacle and the paper sacks in which the household waste is actually carried.

In order to assist convective air flow from the bottom of the container to the top, the outer receptacle typically is provided with a base having at least one vent and more usually a plurality of vents therein.

The vents can be of any size or shape consistent with the requirement for structural integrity, but preferably are sized so as to prevent the ingress of rodents or other unwanted intruders. The vents can be, for example, circular or non-circular, for example of elongate or slotted form, or of ovoidal or polygonal (regular or irregular) form. The vents can be for example from 4 mm to about 8 mm in width or diameter, in circumstances where it is desired to prevent the ingress of rodents. In circumstances where ingress of rodents is not a problem, the size and shape of the vents in the base will depend on *inter alia* the structural integrity of the container and/or the level of support required for the inner receptacle or bag.

The base of the outer receptacle can be formed integrally with the side walls, for example in a single moulding, or it can be formed separately. It can, for example, take the form of a grating or grid or an insert (preferably vented) which rests in, or is secured in, the lower end of the outer receptacle. Thus, the lower end of the receptacle can be provided with a ledge or other support surface upon which the grid can rest. Alternatively, or additionally, a false bottom can be provided in the outer receptacle in the form of an insert, grid or grate, which can be fixed permanently in place or constructed so as to be removable.

In one preferred embodiment, the outer receptacle is provided with a "false floor", e.g. a grating or grid or otherwise perforated surface spaced above the bottom of the container and which serves as the base upon which the bag may rest, air vents being provided both above and below the said surface.

In another preferred embodiment, the there is no "false floor" and the bottom of the container is perforated, vents being provided in the walls of the outer receptacle immediately above the perforated bottom.

The resistance of air flow at the bottom of the container is minimised by providing as large an area of vents as is possible, consistent with maintaining the structural integrity of the container, and prevent access of rodents and other living things. For example, the area of the vents can be from up to 95% (for example 10% to 95%), typically 20% to 80%, more usually up to 70% of the total area of the base, e.g. from 40% to 60%.

The lower end of the outer receptacle can be provided with means for spacing the base from an underlying surface so as to prevent obstruction of the vents by the underlying surface. The means for spacing the base from the underlying surface can take the form of, for example, a wheel or wheels and/or a leg or legs.

It is preferred that the top of the container will have a lid which may have vents, or a rain-proof cowl to draw air through the container, or other ventilation means. The lid is preferably hingedly connected to the outer receptacle. In one embodiment, the lid comprises a plurality (e.g. a pair) of lid members, each hingedly connected to the outer receptacle.

The outer receptacle can contain one bag or a plurality of bags. Where the containment of multiple bags is envisaged, the outer receptacle can be provided with dividers for dividing the interior of the receptacle into compartments, each compartment being intended to contain one or more inner receptacles or bags.

The or each bag can be formed from a paper material, or a permeable polymeric or composite material, for example. The bag can contain a liner or have a surface (e.g. the inner surface) treated (e.g. coated) to alter its strength and/or permeability characteristics to enable it to contain certain types of material more efficiently. The bag can be formed from a material such as paper or another material which is inherently permeable, or it can be formed, for example, from an impermeable material which has been perforated (preferably microperforated or fibrillated) to give it the necessary permeability. One example of such a material is a needled plastics (e.g. polyethylene) film. It will be appreciated that the bag will be formed from a material which is appropriate for the circumstances of its use, and for example the characteristics and structural features of the outer receptacle. Thus, for example, if the bag is to be formed from a relatively weak material, or a material such as recycled paper which has reduced structural integrity upon wetting, the outer receptacle typically will need to provide a greater degree of support to the bag, in terms of numbers and densities of the spacers, than would be required for a relatively durable material such as a Kraft paper.

The bag can be permeable to liquids (such as water), and most preferably is permeable to liquids in vapour form, such as water vapour. The liquid and/or vapour permeability can be unidirectional or bidirectional. Where the permeability is unidirectional, it is typically oriented such that liquid and/or vapour passes from the interior of the bag to its exterior. When a permeable bag is filled with moisture laden organic waste, for example, the outer surface of the bag will become wet, but the shedding of liquids from the bag can generally be avoided by the drying properties of air migrating through the container between the outer receptacle and the bag.

The bag can also be permeable to hydrocarbons, either undirectionally or bidirectionally as aforesaid in relation to liquids and vapours in general.

It will be appreciated from the foregoing that the properties of the inner receptacle which can be exploited include the ability of vapours, gases and liquids to migrate through the inner receptacle, either in both directions, or uni-directionally. Variation in the structural strength of the bags available can be accommodated by varying the amount of support given by the spacers. For example, a paper sack of a given weight and specification of paper containing damp compostable organic waste will require more support from spacers in keeping the surface of the sack away from the inside faces of the outer receptacle than a similar sack containing a dry product of similar weight distribution.

The outer receptacle of the container preferably has suspension means for securing the inner receptacle to an upper end thereof. The suspending means is preferably arranged to hold the inner receptacle or bag in an open configuration. Alternatively, or additionally, the base of the container can be provided with one or more spacer elements for supporting the bag. The spacer(s) can take the form of a platform for supporting the bag. Where the base of the outer receptacle is vented, it is preferred that any such platform is constructed so as not to interfere substantially with the movement of air up through the container. In one embodiment, the lower end of the container can be provided with a tray (e.g. a removable tray) for collecting liquids seeping from the inner receptacle or bag.

In order to assist movement of the container, the outer receptacle is preferably provided with means defining a handle or other formation to enable the container to be lifted or moved.

In addition to the outer receptacle *per se,* the invention also relates to the combination of outer receptacle and bag.

It is envisaged that the containers of the invention will find application not only in the storage, management and collection of waste materials, but also in other fields in which the protection of moisture sensitive materials is considered desirable, for example in the fields of textiles, food, chemicals and pharmaceutical and bulk materials, and in particular fields in which the protection of the contents, and the handlers of the containers, is of importance. In the field of waste management, the container can be for example, a domestic waste container of the "wheelie bin" or "dustbin" variety, intended for use outdoors, or it can be for example a kitchen waste bin.

The invention will now be illustrated by way of example by reference to the particular embodiments shown in the accompanying drawings of which:
Figure 1 shows a cut-away diagram of the outer receptacle in a wheeled bin configuration, in which the bag is suspended in the outer receptacle;
Figure 2 is a side elevation of a container similar to the container of Figure 1;
Figure 3 is a side elevation of a container according to another embodiment of the invention;
Figure 4 is a schematic sectional view from above showing spacers having a rounded edge;
Figure 5 is a schematic sectional view from above showing spacers having a bulbous inner edge;
Figure 6 is a schematic side sectional elevation through a container showing spacers that taper towards the upper end of the container; and
Figure 7is a partial sectional elevation through the container showing a spacer having slots formed therein.

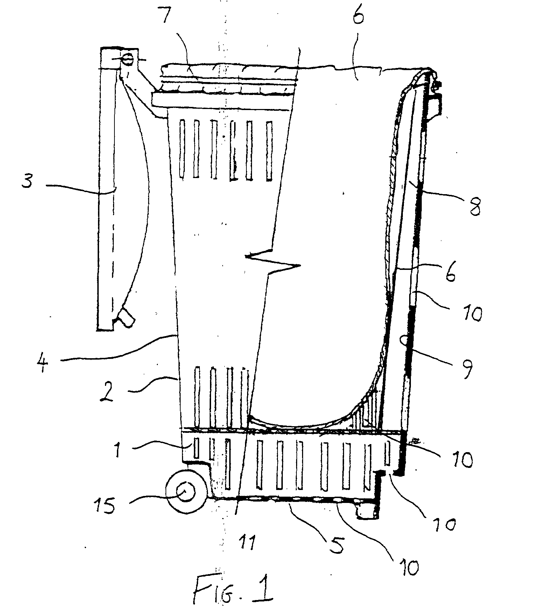

Figure 1 shows a cut-away diagram of a container 2 in a wheeled bin configuration which is provided with an openable lid 3, sides 4 and a bottom face 5. Container 2 constitutes an outer receptacle within which is suspended a bag 6. Bag 6 is secured at the top of the outer receptacle 2 by suspension means 7. The substantially vertical spacers 8 which run parallel to each other from top to bottom of the sides 4 hold the bag 6, in this embodiment a paper sack made of kraft paper, away from the inside face of the side walls 9 of the container 2. Except at the corners between two sides 4 the vents 10 in this embodiment are arranged between each adjacent pair of spacers 8 and extend down the length of the sides as well as the bottom face 5 of the outer receptacle 2. The bag 6 shown in this embodiment is manufactured to a specification in which it is not necessary for its base 11 to be supported by the bottom face 5 of the outer receptacle. In this embodiment the total length of the vents 10 cover typically 50 to 60% of the total length of each side 4 arranged evenly from top to bottom of the container 1 and the width of each vent in this embodiment will be typically 4mm to stop access to rodents. The spacers 8 in the sides 4 in this embodiment are typically around 15mm apart. A pair of wheels 15 are provided.

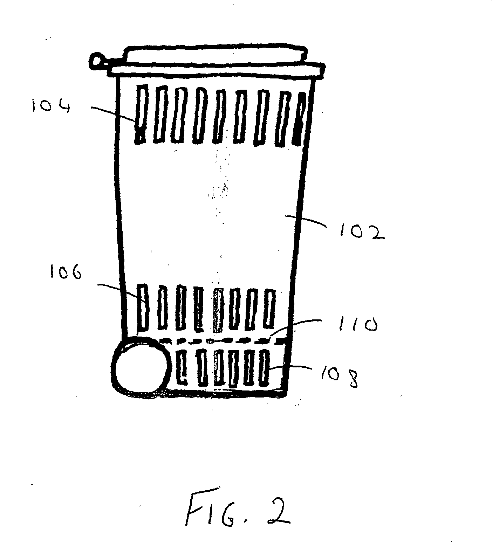

Figure 2 illustrates a container 102 having three rows of vents 104, 106, 108, the lowest row of vents being disposed beneath a grating 110 (shown in phantom) which serves as a false bottom within the container and upon which a bag (not shown) can rest.

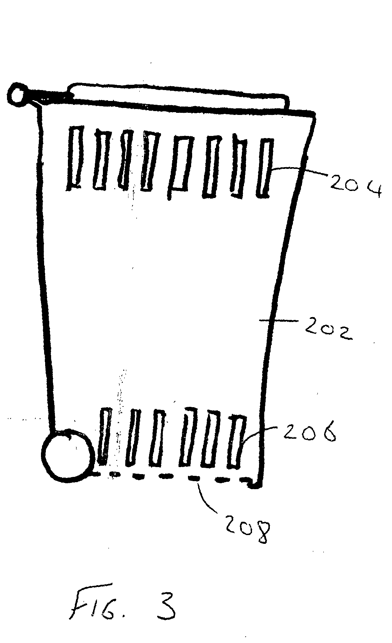

Figure 3 illustrates a container 202 having two rows of vents 204, 206, the lower row 206 being disposed just above the bottom face 208 of the container which, in this embodiment, is perforated.

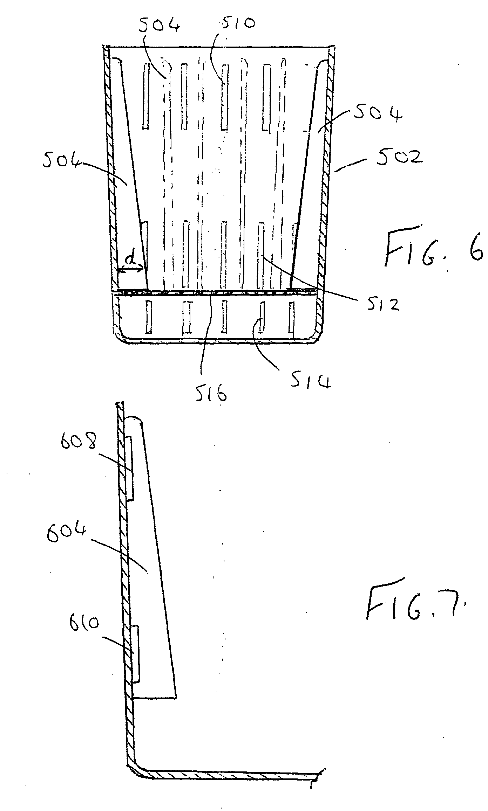

The containers shown in Figures 1 to 3 each have an array of spacers extending inwardly from their inner walls, for example as sown in Figures 6 and 7. Figure 6 is a schematic sectional elevation through a container 502, the container 502 being provided with a plurality of spacers 504 between which are interspersed a plurality of vents 510, 512, 514. The size of the spacers 504 is slightly exaggerated in Figure 6 in order that the features ofthe spacers can be more easily seen. As can be seen, the spacers 504 steadily increase in depth d towards the lower end of the container 502, terminating just above the grating 516 upon which the bag (not shown) can rest. The advantage of such a configuration is that it enables the bag (not shown) to be removed more easily, particularly when the container is tipped. In addition, the increased depth d ofthe spacers towards the lower end of the container means that the air gap between the wall of the outer receptacle and the bag is greater in the region of the bag likely to be the wettest. Thus the increased air flow at the lower end of the container assists more rapid drying of the bag and its contents.

Figure 7 shows a variation on the spacers illustrated in Figure 7. Thus, the spacers 604 have elongate slots 608, 610 therein. In the embodiment shown, there are two slots, but fewer or more slots or holes can be provided where required. In addition, it will be appreciated that instead of slots, the holes could be of circular or square form, for example. The slots serve to reduce the resistance to air flow along the channels formed between adjacent spacers, and also permit airflow to take place laterally between adjacent channels.

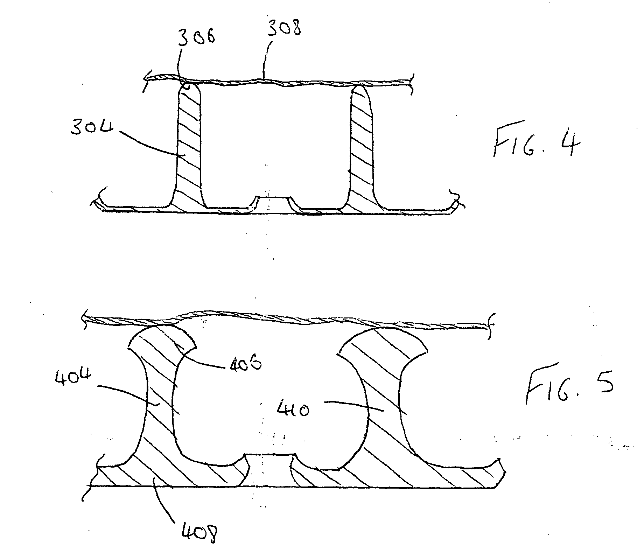

As shown in Figure 4, the spacers 304 typically have a rounded edge 306, the purpose of the rounded edge being to prevent or minimise damage to the surface of the bag 308, particularly when the bag is wet.

An alternative spacer configuration is shown in Figure 5. Here, the spacers 404 have bulbous ends 406 connected to the container wall 408 via concave web regions 410. The curved surfaces presented by concave web regions 410 reduce air resistance and facilitate air flow between the bag and container wall.

By virtue of the foregoing properties, the container of the invention is able to exploit the properties of the inner bag by providing an aerobic environment meeting the requirements of the bag and its contents. The container of the invention achieves its object by the careful positioning and sizing of a plurality of vents, allowing the circulation of air in the container, arranged between a plurality of spacers which hold the one or more bags away from the inside face of the walls of the outer receptacle. As indicated above, the bottom of the container can contain a vent or plurality of vents and spacers, which can be combined with one or more integral or detachable trays to catch liquids and/or solids.

It will be appreciated that the foregoing description is merely exemplary and that numerous modifications and alterations can be made to the particular embodiments shown in the drawings without departing from the principles underlying the invention. For example, in the drawings, the spacers are shown as being integrally formed with the container, but they need not be. As an alternative, they could be formed separately and then affixed to the container wall, for example by means of an adhesive or by welding or by a mechanical means such as a tongue and groove union, or an array of interlocking elements such as lugs and holes. All such modifications and alterations are intended to be embraced by this Application.

## Claims

1. A container defining an outer receptacle, the container being configured to hold therein an inner receptacle in the form of a gas permeable bag, the outer receptacle having a plurality of spacers extending inwardly from an inner surface thereof, and a plurality of vents in the side walls and/or the base of the outer receptacle, the spacers serving to support the inner bag such that it is spaced apart from the inner surface of the outer receptacle, and the vents serving to allow air to circulate between the bag and outer receptacle; characterised in that:
(a) the spacers increase in depth towards a lower end of the outer receptacle; and/or
(b) the spacers have one or more holes therein to permit air to flow in a lateral direction around the bag; and/or
(c) the spacers have rounded inner edges: and/or
(d) the spacers are formed separately with respect to the outer receptacle and are then attached to the outer receptacle.

2. A container according to claim 1 wherein the spacers have at least characteristics (a) and (b)

3. A container according to claim 2 wherein the spacers have characteristic (c).

4. A container according to any one of the preceding claims wherein the spacers are formed integrally with the outer receptacle.

5. A container according to claim 2 wherein the inner edges of the spacers are bulbous.

6. A container substantially as described herein with reference to the accompanying drawings.

7. A container as defined in any one of the preceding claims having a bag therein.
